# EUROPEAN PATENT APPLICATION

(11) **EP 3 508 411 A1**
(43) Date of publication of application: **10.07.2019**
(21) Application number: 19150259.0
(22) Date of filing: 03.01.2019
(51) Int. Cl.: B62M 6/55, B62M 6/50, B62K 19/34, B62K 19/30, B62M 3/00, B62M 11/14

(54) **TUBE-TYPE ELECTRIC DRIVING DEVICE FOR BICYCLE**

(30) Priority: 05.01.2018 TW 10700491
(71) Applicant: Huang, Yung-Sung, Taipei City 104 (TW)
(72) Inventor: Huang, Yung-Sung, Taipei City 104 (TW)
(74) Representative: Michalski Hüttermann & Partner Patentanwälte mbB

(57) **Abstract**

A tube-type electric driving device is disclosed. The tube-type electric driving device comprises a support shaft tube (1100), a motor (100), a reducer (200), a one-way clutch bearing (300), an input gear shaft (400), a shaft frame (600), a pedal shaft (700), a fixing assembly (1200), a power steering component (800), and a Hall sensor (1000). The motor is fixed in the support shaft tube. The reducer is disposed on the driving shaft (101) of the motor. An inner ring of the one-way clutch bearing is mounted on the output shaft (201) of the reducer, and an outer ring of the one-way clutch bearing is fixed in a fixing hole of the input gear shaft. The shaft frame is connected to the support shaft tube. The pedal shaft is rotatably inserted in the shaft frame. The fixing assembly and the power steering component are disposed on the pedal shaft, and the Hall sensor is electrically connected to the motor.

## Description

### FIELD OF THE INVENTION

The present invention generally relates to a tube-type electric driving device for bicycle, more particularly to a tube-type electric driving device in which a magnetic sensing device can be disposed inside a shaft frame for reducing a thickness of entire structure of the tube-type electric driving device.

### BACKGROUND

In recent years, electric drive devices for bicycles are becoming more and more mature, but still too bulky to be completely applied in racing bicycles.

In general, the racing bicycle has special designs in tires and a handle for reducing wind resistance, and also has a narrow space between the pedals thereof to facilitate the user to fast step on the pedal. However, the conventional electric driving device and the magnetic detection device thereof, such as a Hall sensor, may occupy more spaces to cause a longer distance between the pedals, which may reduce the user's experience in riding.

Therefore, what is needed is to develop an electric drive device that can be easily stepped by a user and maintain sufficient power output during riding, and have a suitable thickness for easy riding.

### SUMMARY OF THE INVENTION

In order to solve aforementioned conventional problem, the present invention is to provide a tube-type electric driving device for bicycle. In the tube-type electric driving device, the magnetic sensing device is disposed inside the shaft frame, to reduce a thickness of entire electric driving device and simplify entire structure of the electric driving device.

According an embodiment, the present invention provides a tube-type electric driving device for bicycle. The tube-type electric driving device comprises a support shaft tube, a motor, a reducer, a one-way clutch bearing, an input gear shaft, a shaft frame, a pedal shaft, a fixing assembly, a power steering component, a Hall magnetic sensor, and a ratchet.

The support shaft tube is formed by a hollow tube. The motor is fixed in the support shaft tube and includes a driving shaft. The reducer is disposed on the driving shaft of the motor and configured to output through an output shaft. The one-way clutch bearing includes an inner ring and an outer ring, and the inner ring of the one-way clutch bearing is constrained with the outer ring of the one-way clutch bearing in a rotational direction, and pivoted correspondingly to the outer ring in a direction opposite to the rotational direction, and the inner ring of the one-way clutch bearing is mounted on the output shaft. The input gear shaft includes a fixing hold formed on a top thereof, and the outer ring of the one-way clutch bearing is fixed in the fixing hole, and the input gear shaft comprises a first steering gear disposed thereon. The shaft frame is disposed on a bottom of the support shaft tube and connected to the support shaft tube, and the shaft frame includes a first axle hole and a second axle hole formed on two horizontal ends thereof, respectively. The pedal shaft is rotatably inserted through the shaft frame and out of the first axle hole and the second axle hole. The fixing assembly is disposed on an end of the pedal shaft, and comprises an outer fixing cover, a hold, and a plurality of elastic components. The outer fixing cover is disposed on an end of the pedal shaft and adjacent to the second axle hole, and co-rotatable with the pedal shaft, and includes a first through hole and a plurality of first hook parts. The pedal shaft is inserted through the first through hole of the outer fixing cover, and the plurality of first hook parts are disposed on a periphery of an inner surface of the outer fixing cover. The holder comprises a second through hole and a plurality of second hook parts, and the plurality of second hook parts are disposed on a periphery of an inner surface of the holder correspondingly in position to the plurality of first hook parts. The plurality of elastic components are disposed in a plurality of grooves formed between the plurality of first hook parts and the plurality of second hook parts, respectively, and the plurality of elastic components are abutted against the plurality of first hook parts and the plurality of second hook parts, to make the plurality of first hook parts and the plurality of second hook parts engage with each other, respectively, so as to connect the outer fixing cover and the holder.

The power steering component is formed by a long tube member, and rotatably mounted on the pedal shaft and comprises a second steering gear directly engaged with the first steering gear. The holder is mounted on the power steering component correspondingly in position to the second through hole of the holder. The Hall magnetic sensor is electrically connected to the motor, and comprises a first magnetic ring, a Hall magnetic sensor cover, a Hall magnetic sensing component and a second magnetic ring. The first magnetic ring is mounted on the pedal shaft and adjacent to the first axle hole. The Hall magnetic sensor cover is connected to the shaft frame and covered on the first axle hole, and the pedal shaft is inserted through the Hall magnetic sensor cover. The Hall magnetic sensing component is disposed on an inner surface of the Hall magnetic sensor cover and adjacent to the first magnetic ring. The second magnetic ring is disposed on the power steering component and overlapped with the first magnetic ring axially.

The ratchet is mounted on the pedal shaft and disposed on the inner surface of the outer fixing cover. When the outer fixing cover compresses the plurality of elastic components and rotates relative to the holder, and the first magnetic ring is rotated relative to the second magnetic ring, and the Hall magnetic sensing component senses a change in magnetic field caused by the relative rotation between the first magnetic ring and the second magnetic ring and transmits an electric signal to control the motor to rotate.

Preferably, the pedal shaft is inserted through a first end of the first axle hole to be constrained and fixed on the first pedal assembly, and co-rotatable with the first pedal assembly, and the pedal shaft is inserted through a second end of the second axle hole to be constrained and fixed on the second pedal assembly and rotatable with the second pedal assembly.

Preferably, when the ratchet can be driven by the motor to rotate free, and the first pedal assembly and the second pedal assembly are not driven by the motor.

Preferably, when the first pedal assembly and the second pedal assembly are stepped, the pedal shaft and the input gear shaft are driven to rotate, and the input gear shaft drives the outer ring of the one-way clutch bearing to pivot relative to the inner ring without driving the motor to rotate.

Preferably, the holder is connected to a gear set of a bicycle.

Preferably, when the gear set is not rotated or the rotational speed of the gear set is reduced, the outer fixing cover compresses the plurality of elastic components and rotates relative to the holder.

Preferably, each of the first magnetic ring and the second magnetic ring comprises a plurality of magnetic poles arranged in a staggered manner.

Preferably, the elastic component comprises a spring.

Preferably, the one-way clutch bearing is perpendicular to the ratchet in an axial direction.

Preferably, the reducer comprises a planetary reducer.

### BRIEF DESCRIPTION OF THE DRAWINGS

The structure, operating principle and effects of the present invention will be described in detail by way of various embodiments which are illustrated in the accompanying drawings.
FIG. 1 is a schematic view of a tube-type electric driving device for bicycle, according to an embodiment of the present invention.

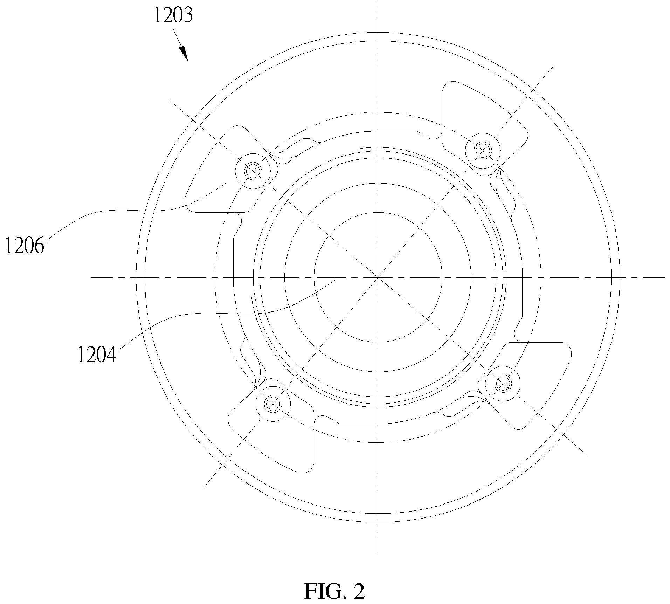

FIG. 2 is a schematic view of an outer fixing cover of a tube-type electric driving device for bicycle, according to an embodiment of the present invention.

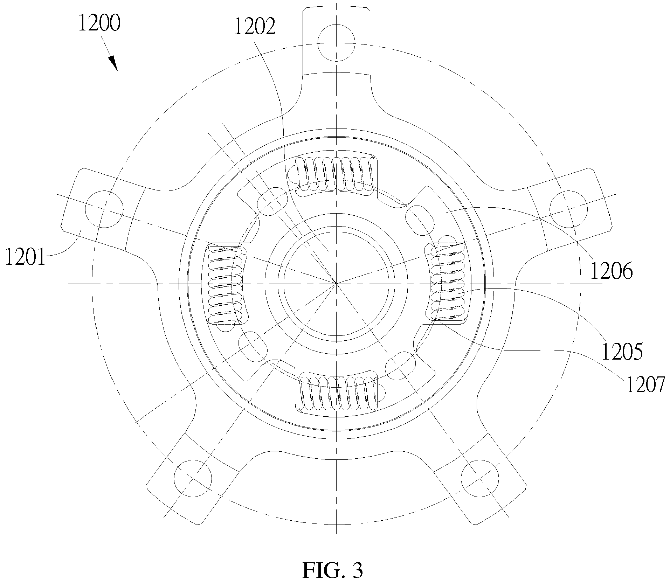

FIG. 3 is a schematic view of a holder of a tube-type electric driving device for bicycle, according to an embodiment of the present invention.
FIG. 4 is a schematic view of a tube-type electric driving device for bicycle, according to a first embodiment of the present invention.
FIG. 5 is a schematic view of a tube-type electric driving device for bicycle, according to a second embodiment of the present invention.

### DETAILED DESCRIPTION

The following embodiments of the present invention are herein described in detail with reference to the accompanying drawings. These drawings show specific examples of the embodiments of the present invention. It is to be understood that these embodiments are exemplary implementations and are not to be construed as limiting the scope of the present invention in any way. Further modifications to the disclosed embodiments, as well as other embodiments, are also included within the scope of the appended claims. These embodiments are provided so that this disclosure is thorough and complete, and fully conveys the inventive concept to those skilled in the art. Regarding the drawings, the relative proportions and ratios of elements in the drawings may be exaggerated or diminished in size for the sake of clarity and convenience. Such arbitrary proportions are only illustrative and not limiting in any way. The same reference numbers are used in the drawings and description to refer to the same or like parts.

It is to be understood that, although the terms 'first', 'second', 'third', and so on, may be used herein to describe various elements, these elements should not be limited by these terms. These terms are used only for the purpose of distinguishing one component from another component. Thus, a first element discussed herein could be termed a second element without altering the description of the present disclosure. As used herein, the term "or" includes any and all combinations of one or more of the associated listed items.

It will be understood that when an element or layer is referred to as being "on," "connected to" or "coupled to" another element or layer, it can be directly on, connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the word "comprise" and variations such as "comprises" or "comprising", will be understood to imply the inclusion of stated elements but not the exclusion of any other elements.

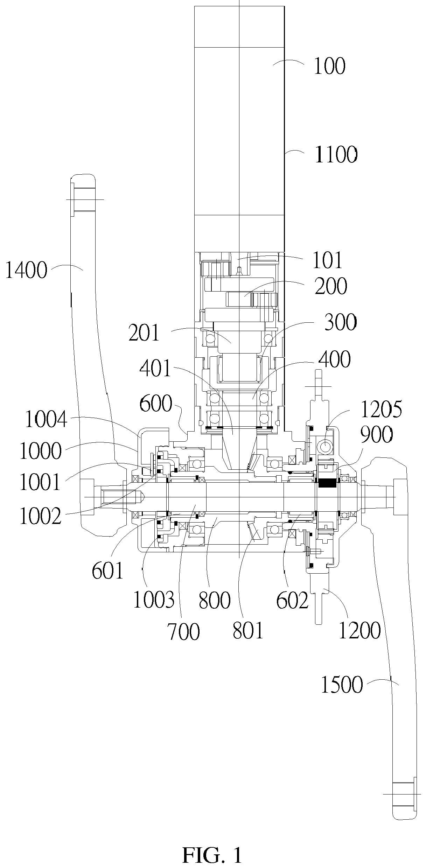

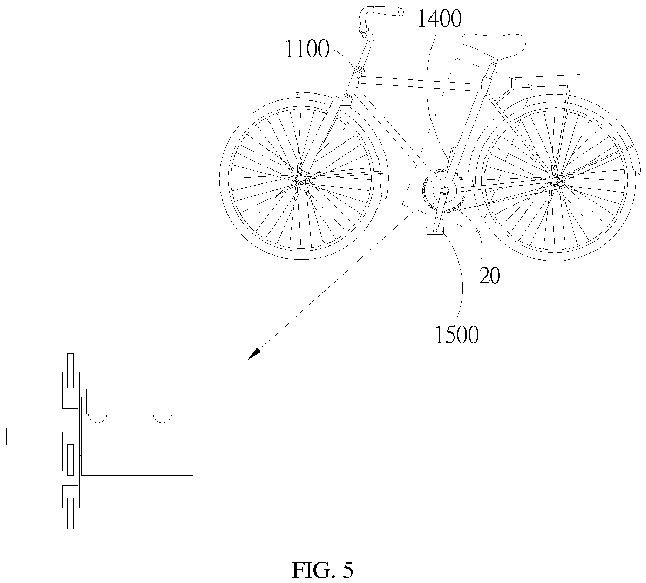

Please refer to FIGS. 1 and 5, which are schematic view of tube-type electric driving device, an outer fixing cover and a holder of an embodiment of the present invention, and schematic views of tube-type electric driving device of a first embodiment and second embodiment, respectively.

As shown in figures, the tube-type electric driving device for bicycle can comprise a support shaft tube 1100, a motor 100, a reducer 200, a one-way clutch bearing 300, an input gear shaft 400, a shaft frame 600, a pedal shaft 700, a fixing assembly 1200, a power steering component 800, a Hall magnetic sensor 1000, and a ratchet 900.

The support shaft tube 1100 can be a hollow tube, and the motor 100 can be disposed and fixed in the support shaft tube 1100. The reducer 200 can be dispose on the driving shaft 101 of the motor 100 and configured to output through an output shaft 201, Preferably, the motor 100 can be a tube-type motor in a cylinder shape, and the motor 100 can be disposed and fixed in the support shaft tube 1100, and include a driving shaft 101. In an embodiment, the reducer 200 can comprise a planetary reducer.

The one-way clutch bearing 300 includes an inner ring and an outer ring. The inner ring of the one-way clutch bearing 300 is constrained with the outer ring of the one-way clutch bearing 300 in a rotational direction, and pivoted correspondingly to the outer ring in a direction opposite to the rotational direction. The inner ring of the one-way clutch bearing 300 is mounted on the output shaft 201.

The input gear shaft 400 includes a fixing hole formed on a top thereof, and the outer ring of the one-way clutch bearing 300 is fixed in the fixing hole. The input gear shaft 400 includes a first steering gear 401 disposed thereon. With the configuration of the one-way clutch bearing 300 and the input gear shaft 400, the motor 100 can output stable power to satisfy the requirement in driving the bicycle; furthermore, the reducer 200 including a planetary reducer can be designed to have different gear ratio for obtaining the required output power.

The shaft frame 600 is disposed on a bottom of the support shaft tube 1100, and connected to the support shaft tube 1100. The shaft frame 600 can include a first axle hole 601 and a second axle hole 602 formed on two horizontal ends thereof, respectively. The pedal shaft 700 can be rotatably inserted through the shaft frame 600 and out of the first axle hole 601 and the second axle hole 602.

In an embodiment, the pedal shaft 700 can be inserted through a first end of the first axle hole 601 to be constrained with and fixed on the first pedal assembly 1400, so that the pedal shaft 700 is co-rotatable with the first pedal assembly 1400. The pedal shaft 700 can be inserted through a second end of the second axle hole 602 to be constrained and fixed on the second pedal assembly 1500, so that the pedal shaft 700 is co-rotatable with the second pedal assembly 1500.

Furthermore, in an embodiment, at least one bearing unit can be disposed between the pedal shaft 700 and the first axle hole 601, and at least one bearing unit can also be disposed between the power steering component 800 and the second axle hole 602, so that the pedal shaft 700 can be smoothly operated in the first axle hole 601 and the second axle hole 602.

The fixing assembly 1200 can be disposed on an end of the pedal shaft 700, and comprise a holder 1201, a second through hole 1202, an outer fixing cover 1203, a first through hole 1204 and a plurality of elastic components 1205. The outer fixing cover 1203 can be inserted through an end of the pedal shaft 700, disposed adjacent to the second axle hole 602, and co-rotatable with the pedal shaft 700. The outer fixing cover 1203 includes the first through hole 1204 and a plurality of first hook parts 1206, and the pedal shaft 700 can be inserted through the first through hole 1204, and the plurality of first hook parts 1206 are disposed on the periphery of the inner surface of the holder 1201.

The holder 1201 includes the second through hole 1202 and a plurality of second hook parts 1207. The plurality of plurality of second hook parts 1207 are disposed on the periphery of the inner surface of the outer fixing cover 1203 correspondingly in position to the plurality of plurality of first hook parts 1206, and the plurality of elastic components 1205 are disposed in a plurality of plurality of grooves formed between the first hook parts 1206 and the second hook parts 1207, and abutted against the first hook parts 1206 and the second hook parts 1207, to make the first hook parts 1206 and the second hook parts 1207 engage with each other, respectively, so as to connect the holder 1201 and the outer fixing cover 1203. In an embodiment, the elastic component 1205 can comprise a spring.

The power steering component 800 can be a long tube member and rotatably mounted on the pedal shaft 700, and comprises a second steering gear 801 which is directly engaged with the first steering gear 401. The holder 1201 can be mounted on the power steering component 800 correspondingly in position to the second through hole 1202 of the holder 1201.

The Hall magnetic sensor 1000 can be electrically connected to the motor 100, and comprise a first magnetic ring 1002, a Hall magnetic sensor cover 1004, a Hall magnetic sensing component 1001, and a second magnetic ring 1003. The first magnetic ring 1002 can be mounted on the pedal shaft 700 and adjacent to the first axle hole 601. The Hall magnetic sensor cover 1004 can be connected to the shaft frame 600 and covered on the first axle hole 601. The pedal shaft 700 can be inserted through the Hall magnetic sensor cover 1004, and the Hall magnetic sensing component 1001 can be disposed on the inner surface of the Hall magnetic sensor cover 1004, and adjacent to the first magnetic ring 1002, and the second magnetic ring 1003 can be disposed on the power steering component 800, and overlapped with the first magnetic ring 1002 axially. In an embodiment, each of the first magnetic ring 1002 and the second magnetic ring 1003 can comprise a plurality of magnetic poles arranged in a staggered manner.

The first magnetic ring 1002 and the second magnetic ring 1003 can be disposed in the shaft frame 600 without increasing the thickness of entire electric driving device; furthermore, the Hall magnetic sensor cover 1004 is covered on the first axle hole 601, so the components in the shaft frame 600 can be protected without using other outer cover, so as to reduce material cost and the thickness of entire structure.

The ratchet 900 can be mounted on the pedal shaft 700, and disposed on the inner surface of the outer fixing cover 1203. The one-way clutch bearing 300 is perpendicular to the ratchet 900 in an axial direction. The one-way clutch bearing 300 is disposed between the output shaft 201 and input gear shaft 400, and the ratchet 900 is disposed in the outer fixing cover 1203 and mounted on the pedal shaft 700, so that the one-way clutch bearing 300 is perpendicular to the ratchet 900 in an axial direction, and it is not necessary to dispose the ratchet 900 and the one-way clutch bearing 300 both in the holder 1201 and the outer fixing cover 1203, thereby reducing the thickness. As a result, the user can feel comfortable while riding the bicycle.

In an embodiment, when the motor 100 is being operated, the ratchet 900 is driven to rotate free, the first pedal assembly 1400 and the second pedal assembly 1500 are not driven by the motor 100, so as to prevent the first pedal assembly 1400 and the second pedal assembly 1500 from rotating in high speed to make the user feel uncomfortable and dangerous during riding.

In another embodiment, when there is no electric power to drive motor and the first pedal assembly 1400 and the second pedal assembly 1500 are stepped, the pedal shaft 700 and the input gear shaft 400 can be driven to rotate, and the input gear shaft 400 can drive the outer ring of the one-way clutch bearing 300 to pivot relative to the inner ring and does not drive the motor 100 to rotate. As a result, when the first pedal assembly 1400 and the second pedal assembly 1500 are stepped, the rider does not need to do more effort to overcome the resistance of the motor 100.

In another embodiment, when the first pedal assembly 1400 and the second pedal assembly 1500 are stepped, the pedal shaft 700 and the ratchet 900 are co-rotated so that the outer fixing cover 1203 bears an external force, and the elastic component 1205 is compressed by the outer fixing cover 1203, and the outer fixing cover 1203 is rotated relative to the holder 1201; and, at the same time, the first magnetic ring 1002 of the pedal shaft 700 is also rotated relative to the second magnetic ring 1003, so the Hall magnetic sensing component 1001 can sense the change in magnetic field caused by the relative rotation between the first magnetic ring 1002 and the second magnetic ring 1003, and then transmit an electric signal to control the motor 100 to rotate.

In an embodiment, the holder 1201 can be connected to the gear set 20 of the bicycle, so that the motor 100 can be used to move the bicycle forwardly or the user can step the first pedal assembly 1400 and the second pedal assembly 1500 to move the bicycle forwardly. When the gear set 20 is not rotated or the rotational speed of the gear set 20 is reduced, for example, the user just starts to ride the bicycle or rides the bicycle to climb, the pedal shaft 700 can drive the outer fixing cover 1203 to rotate, and the outer fixing cover 1203 bears the force higher than a preset force, so that the outer fixing cover 1203 compresses the holder 1201 to rotate; and, in response to the change in magnetic field caused by the relative rotation between the first magnetic ring 1002 and the second magnetic ring 1003, the motor 100 is activated to reduce the user's burden in stepping the bicycle to move. In an embodiment, in order to guarantee user's safety, the user can stop the operation of the motor 100 by braking the bicycle, so as to prevent from the danger caused by high-speed operation of the motor 100.

By applying the tube-type electric driving device of the present invention to a bicycle, when the user drives the bicycle to forwardly move by electrical power, the one-way clutch bearing 300, and the ratchet 900 disposed on the pedal shaft 700 can prevent the first pedal assembly 1400 and the second pedal assembly 1500 from being driven, so as to prevent the first pedal assembly 1400 and the second pedal assembly 1500 from being driven by the motor 100 to rotate in high speed to make the user feel uncomfortable and dangerous during riding; alternatively, the user can also drive the bicycle by stepping only, and the electric driving assembly will not be driven, so as to prevent from increasing the user's burden in riding, and also prevent from the unnecessary frictional loss of internal components.

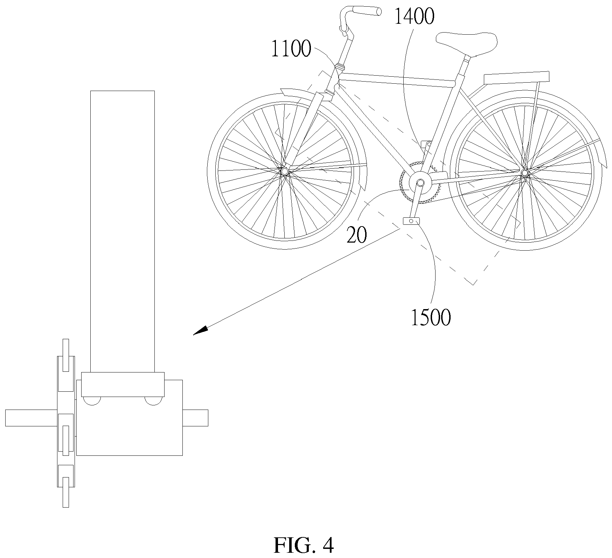

In another embodiment, as shown in FIG. 4, the support shaft tube 1100 can be disposed at a location of a down tube of the bicycle; in another embodiment, as shown in FIG. 5, the support shaft tube 1100 can be disposed in a seat tube of the bicycle.

The support shaft tube 1100 can be disposed in the location of the down tube or the seat tube, and the one-way clutch bearing 300 can be connected to the reducer 200 and integrated with the support shaft tube 1100, and the first magnetic ring 1002 and the second magnetic ring 1003 are also disposed in the shaft frame 600, and the Hall magnetic sensor cover 1004 is covered on the first axle hole 601, so that it is not necessary to use other outer cover and the thickness of the driving device can be reduced.

The one-way clutch bearing 300, the first magnetic ring 1002 and the second magnetic ring 1003 are disposed in the space of the support shaft tube 1100 and the shaft frame 600, so that the present invention can effectively reduce the distance between the first pedal assembly 1400 and the second pedal assembly 1500 without affecting user's riding experience; furthermore, the distance between the first pedal assembly 1400 and the second pedal assembly 1500 of the present invention is shorter than that of the bicycle with conventional ancillary driving device, so that the distance between the user's two legs can shorter and the user can step the bicycle to accelerate more easily.

The present invention disclosed herein has been described by means of specific embodiments. However, numerous modifications, variations and enhancements can be made thereto by those skilled in the art without departing from the spirit and scope of the disclosure set forth in the claims.

## Claims

1. A tube-type electric driving device for bicycle, comprising:
a support shaft tube (1100) formed by a hollow tube;
a motor (100) fixed in the support shaft tube (1100) and comprising a driving shaft (101);
a reducer (200) disposed on the driving shaft (101) of the motor (100) and configured to output through an output shaft (201);
a one-way clutch bearing (300) comprising an inner ring and an outer ring, wherein the inner ring of the one-way clutch bearing (300) is constrained with the outer ring of the one-way clutch bearing (300) in a rotational direction, and pivoted correspondingly to the outer ring in a direction opposite to the rotational direction, and the inner ring of the one-way clutch bearing (300) is mounted on the output shaft (201);
an input gear shaft (400) comprising a fixing hold formed on a top thereof, and wherein the outer ring of the one-way clutch bearing (300) is fixed in the fixing hole, and the input gear shaft (400) comprises a first steering gear (401) disposed thereon;
a shaft frame (600) disposed on a bottom of the support shaft tube (1100) and connected to the support shaft tube (1100), and the shaft frame (600) comprising a first axle hole (601) and a second axle hole (602) formed on two horizontal ends thereof, respectively;
a pedal shaft (700) rotatably inserted through the shaft frame (600) and out of the first axle hole (601) and the second axle hole (602);
a fixing assembly (1200) disposed on an end of the pedal shaft (700), and comprising:
an outer fixing cover (1203) disposed on an end of the pedal shaft (700) and adjacent to the second axle hole (602), and co-rotatable with the pedal shaft (700), and comprising a first through hole (1204) and a plurality of first hook parts (1206), wherein the pedal shaft (700) is inserted through the first through hole (1204) of the outer fixing cover (1203), and the plurality of first hook parts (1206) are disposed on a periphery of an inner surface of the outer fixing cover (1203);
a holder (1201) comprising a second through hole (1202) and a plurality of second hook parts (1207), wherein the plurality of second hook parts (1207) are disposed on a periphery of an inner surface of the holder (1201) correspondingly in position to the plurality of first hook parts (1206); and
a plurality of elastic components (1205) disposed in a plurality of grooves formed between the plurality of first hook parts (1206) and the plurality of second hook parts (1207), respectively, wherein the plurality of elastic components (1205) are abutted against the plurality of first hook parts (1206) and the plurality of second hook parts (1207), to make the plurality of first hook parts (1206) and the plurality of second hook parts (1207) engage with each other, respectively, so as to connect the outer fixing cover (1203) and the holder (1201);
a power steering component (800) formed by a long tube member, and rotatably mounted on the pedal shaft (700), and comprising a second steering gear (801) directly engaged with the first steering gear (401), wherein the holder (1201) is mounted on the power steering component (800) correspondingly in position to the second through hole (1202) of the holder (1201);
a Hall magnetic sensor (1000) electrically connected to the motor (100), and comprising:
a first magnetic ring (1002) mounted on the pedal shaft (700) and adjacent to the first axle hole (601);
an Hall magnetic sensor cover (1004) connected to the shaft frame (600) and covered on the first axle hole (601), wherein the pedal shaft (700) is inserted through the Hall magnetic sensor cover (1004);
a Hall magnetic sensing component (1001) disposed on an inner surface of the Hall magnetic sensor cover (1004) and adjacent to the first magnetic ring (1002);
a second magnetic ring (1003) disposed on the power steering component (800), and overlapped with the first magnetic ring (1002) axially; and
a ratchet (900) mounted on the pedal shaft (700), and disposed on the inner surface of the outer fixing cover (1203);
wherein when the outer fixing cover (1203) compresses the plurality of elastic components (1205) and rotates relative to the holder (1201), and the first magnetic ring (1002) is rotated relative to the second magnetic ring (1003), and the Hall magnetic sensing component (1001) senses a change in magnetic field caused by the relative rotation between the first magnetic ring (1002) and the second magnetic ring (1003) and transmits an electric signal to control the motor (100) to rotate.

2. The tube-type electric driving device for bicycle according to claim 1, wherein the pedal shaft (700) is inserted through a first end of the first axle hole (601) to be constrained and fixed on a first pedal assembly (1400), and co-rotatable with the first pedal assembly (1400), and the pedal shaft (700) is inserted through a second end of the second axle hole (602) to be constrained and fixed on a second pedal assembly (1500) and rotatable with the second pedal assembly (1500).

3. The tube-type electric driving device for bicycle according to claim 1 or claim 2, wherein when the ratchet (900) is driven by the motor (100) to rotate free, the first pedal assembly (1400) and the second pedal assembly (1500) are not driven by the motor (100).

4. The tube-type electric driving device for bicycle according to claim 1 or claim 2, wherein when the first pedal assembly (1400) and the second pedal assembly (1500) are stepped, the pedal shaft (700) and the input gear shaft (400) are driven to rotate, and the input gear shaft (400) drives the outer ring of the one-way clutch bearing (300) to pivot relative to the inner ring without driving the motor (100) to rotate.

5. The tube-type electric driving device for bicycle according to any one of proceeding claims, wherein the holder (1201) is connected to a gear set (20) of a bicycle.

6. The tube-type electric driving device for bicycle according to claim 5, wherein when the gear set (20) is not rotated or the rotational speed of the gear set (20) is reduced, the outer fixing cover (1203) compresses the plurality of elastic components (1205) and rotates relative to the holder (1201).

7. The tube-type electric driving device for bicycle according to any one of proceeding claims, wherein each of the first magnetic ring (1002) and the second magnetic ring (1003) comprises a plurality of magnetic poles arranged in a staggered manner.

8. The tube-type electric driving device for bicycle according to any one of proceeding claims, wherein the elastic components (1205) comprises a spring.

9. The tube-type electric driving device for bicycle according to any one of proceeding claims, wherein the one-way clutch bearing (300) is perpendicular to the ratchet (900) in an axial direction.

10. The tube-type electric driving device for bicycle according to any one of proceeding claims, wherein the reducer (200) comprises a planetary reducer (200).
